# EUROPEAN PATENT SPECIFICATION

(11) **EP 4 546 288 B1**
(45) Date of publication and mention of the grant of the patent: **04.11.2026**
(21) Application number: 25164118.9
(22) Date of filing: 17.03.2025
(51) Int. Cl.: G06V 20/56, G06V 10/44, G06V 10/82, G06V 10/774, G06V 10/778, G06N 3/047, G06N 3/044, G06N 3/088, G06N 3/045, G06N 3/0455, G06N 3/0464, G06N 3/0475

(54) **CONTROL SIGNAL PREDICTION USING PERCEPTION DATA FOR AUTONOMOUS DRIVING**
VORHERSAGE VON STEUERSIGNALEN ANHAND VON WAHRNEHMUNGSDATEN FÜR DAS AUTONOME FAHREN
PRÉDICTION DU SIGNAL DE COMMANDE À L'AIDE DE DONNÉES DE PERCEPTION POUR LA CONDUITE AUTONOME

(30) Priority: 19.06.2024 CN 202410796725
(43) Date of publication of application: 30.04.2025
(73) Proprietor: Beijing Baidu Netcom Science Technology Co., Ltd., Beijing 100085 (CN)
(72) Inventor: GONG, Shi, Beijing, 100085 (CN); YE, Xiaoqing, Beijing, 100085 (CN); TAN, Xiao, Beijing, 100085 (CN); DING, Errui, Beijing, 100085 (CN); WANG, Jingdong, Beijing, 100085 (CN); WU, Tian, Beijing, 100085 (CN); WANG, Haifeng, Beijing, 100085 (CN)
(74) Representative: Stöckeler, Ferdinand

(56) References cited:
- US-A1- 20240 104 934
- ANTHONY HU ET AL: "GAIA-1: A Generative World Model for Autonomous Driving", ARXIV.ORG, CORNELL UNIVERSITY LIBRARY, 29 September 2023 (2023-09-29), 201 OLIN LIBRARY CORNELL UNIVERSITY ITHACA, NY 14853, XP091626566
- ISHIHARA KEISHI: "Decomposing Trajectory Forecasting into Route and Motion: Enhancing End-to-end Autonomous Driving with Route Map Inputs", 2023 IEEE INTERNATIONAL CONFERENCE ON ROBOTICS AND BIOMIMETICS (ROBIO), 4 December 2023 (2023-12-04), IEEE, Piscataway, NJ, USA, pages 1 - 7, XP034501645, DOI: 10.1109/ROBIO58561.2023.10354693
- JIN BU ET AL: "ADAPT: Action-aware Driving Caption Transformer", 2023 IEEE INTERNATIONAL CONFERENCE ON ROBOTICS AND AUTOMATION (ICRA), 29 May 2023 (2023-05-29), IEEE, Piscataway, NJ, USA, pages 7554 - 7561, XP034368548, DOI: 10.1109/ICRA48891.2023.10160326
- HUANG HAIRUI ET AL: "Joint Model of Intent Recognition and Slot Filling Based on Graph Neural Network fusion of external knowledge base", 2024 36TH CHINESE CONTROL AND DECISION CONFERENCE (CCDC), IEEE, 25 May 2024 (2024-05-25), IEEE, Piscataway, NJ, USA, pages 323 - 329, XP034640940, DOI: 10.1109/CCDC62350.2024.10587455
- FAN JIA ET AL: "ADriver-I: A General World Model for Autonomous Driving", ARXIV.ORG, 22 November 2023 (2023-11-22), pages 1 - 12, XP093365919, Retrieved from the Internet <URL:https://arxiv.org/abs/2311.13549> [retrieved on 20260212]

## Description

### TECHNICAL FIELD

The present disclosure relates to a field of artificial intelligence technology, and in particular, to fields of computer vision technology and deep learning technology, which may be applied to scenarios such as autonomous driving. And more specifically, the present disclosure relates to an information prediction method and apparatus, a method and an apparatus of training an autonomous driving model, a device, a medium, a program product and an autonomous driving vehicle.

### BACKGROUND

With a rapid development of artificial intelligence and autonomous driving technologies, an end-to-end autonomous driving system has attracted much attention due to its simplified system architecture, reduced error accumulation and global optimization capabilities.

For example, the autonomous driving system may predict a control signal for a vehicle by analyzing perception data. The vehicle may control a braking system according to a predicted control signal, so as to achieve automatic driving of the vehicle. Through settings of the autonomous driving system, it is possible to meet requirements for convenient travel to a certain extent.

ANTHONY HU ET AL: "GAIA-1: A Generative World Model for Autonomous Driving", ARXIV.ORG, CORNELL UNIVERSITY LIBRARY, 29 September 2023 (2023-09-29), XP091626566, 201 OLIN LIBRARY CORNELL UNIVERSITY ITHACA, NY 14853 discloses a generative world model for autonomous driving.

ISHIHARA KEISHI: "Decomposing Trajectory Forecasting into Route and Motion: Enhancing End-to-end Autonomous Driving with Route Map Inputs", 2023 IEEE INTERNATIONAL CONFERENCE ON ROBOTICS AND BIOMIMETICS (ROBIO), 4 December 2023 (2023-12-04), pages 1-7, XP034501645, IEEE, Piscataway, NJ, USA DOI: 10.1109/ROBIO58561.2023.10354693 discloses a method of enhancing end-to-end autonomous driving with route map inputs.

Fan Jia ET AL: "ADriver-I: A General World Model for Autonomous Driving",arXiv.org, 22 November 2023 (2023-11-22), pages 1-12, discloses a general world model based on MLLM and diffusion model for autonomous driving, termed ADriver-I. It takes vision-action pairs as inputs and autoregressively predicts a control signal of current frame.

### SUMMARY

The present disclosure provides an information prediction method and apparatus, a method and an apparatus of training an autonomous driving model, a device, a medium, a program product and an autonomous driving vehicle that achieve control information prediction without relying on large-scale accurate annotated data. The invention is defined by the appended claims.

According to a first aspect of the present disclosure, there is provided an information prediction method, including: acquiring perception data including image data acquired by a sensor in a vehicle and driving data of the vehicle; encoding the image data to obtain an image token sequence corresponding to the image data; encoding the driving data to obtain a driving feature corresponding to the driving data; and generating, using a generative model, a predicted token sequence corresponding to the image token sequence and a control information for the vehicle based on the driving feature and the image token sequence.

According to a second aspect of the present disclosure, there is provided a method of training an autonomous driving model. The autonomous driving model includes an encoding layer and a generative model. The encoding layer includes a sequence encoding network and a driving data encoding network. The training method includes: encoding, using the sequence encoding network, image data in sample perception data to obtain an image token sequence corresponding to the image data; encoding, using the driving data encoding network, driving data in the sample perception data to obtain a driving feature corresponding to the driving data; generating, using the generative model, a predicted token sequence corresponding to the image token sequence and a predicted control information for a vehicle based on the driving feature and the image token sequence; and training the autonomous driving model according to the predicted token sequence and the image token sequence.

According to a third aspect of the present disclosure, there is provided an information prediction apparatus, including: a data acquisition module configured to acquire perception data including image data acquired by a sensor in a vehicle and driving data of the vehicle; a first encoding module configured to encode the image data to obtain an image token sequence corresponding to the image data; a second encoding module configured to encode the driving data to obtain a driving feature corresponding to the driving data; and a generation module configured to generate, using a generative model, a predicted token sequence corresponding to the image token sequence and a control information for the vehicle based on the driving feature and the image token sequence.

According to a fourth aspect of the present disclosure, there is provided an apparatus of training an autonomous driving model. The autonomous driving model includes an encoding layer and a generative model. The encoding layer includes a sequence encoding network and a driving data encoding network. The training apparatus includes: a first encoding module configured to encode, using the sequence encoding network, image data in sample perception data to obtain an image token sequence corresponding to the image data; a second encoding module configured to encode, using the driving data encoding network, driving data in the sample perception data to obtain a driving feature corresponding to the driving data; a generation module configured to generate, using the generative model, a predicted token sequence corresponding to the image token sequence and a predicted control information for a vehicle based on the driving feature and the image token sequence; and a training module configured to train the autonomous driving model according to the predicted token sequence and the image token sequence.

According to a fifth aspect of the present disclosure, there is provided an electronic device including: at least one processor; and a memory communicatively coupled with the at least one processor, where the memory stores instructions executable by the at least one processor, and the instructions, when executed by the at least one processor, are used to cause the at least one processor to implement the information prediction method provided by the present disclosure.

According to a sixth aspect of the present disclosure, there is provided an electronic device including: at least one processor; and a memory communicatively coupled with the at least one processor, where the memory stores instructions executable by the at least one processor, and the instructions, when executed by the at least one processor, are used to cause the at least one processor to implement the method of training the autonomous driving model provided by the present disclosure.

According to a seventh aspect of the present disclosure, there is provided a non-transitory computer readable storage medium storing computer instructions, where the computer instructions are used to cause a computer to implement the information prediction method or the method of training the autonomous driving model provided by the present disclosure.

According to an eighth aspect of the present disclosure, there is provided a computer program product, including a computer program/instruction, where the computer program/instruction is stored on at least one of a readable storage medium and an electronic device, and the computer program/instruction, when executed by a processor, is used to implement the information prediction method or the method of training the autonomous driving model provided by the present disclosure.

According to a ninth aspect of the present disclosure, there is provided an autonomous driving vehicle including the electronic device provided in the fifth aspect of the present disclosure.

It should be understood that the content described in this section is not intended to identify key or important features of embodiments of the present disclosure, nor is it intended to limit the scope of the present disclosure. Other features of the present disclosure will be easily understood through following specification.

### BRIEF DESCRIPTION OF THE DRAWINGS

The accompanying drawings are used to better understand this scheme and do not constitute a limitation of the present disclosure, in which:
FIG. 1 shows a schematic diagram of an application scenario of an information prediction method and apparatus and a method and an apparatus of training an autonomous driving model according to embodiments of the present disclosure;
FIG. 2 shows a flowchart of an information prediction method according to embodiments of the present disclosure;
FIG. 3 shows a schematic diagram of an implementation principle of an information prediction method according to embodiments of the present disclosure;
FIG. 4 shows a schematic diagram of a principle of encoding navigation data according to embodiments of the present disclosure;
FIG. 5 shows a schematic diagram of a principle of encoding image data to obtain an image token sequence according to embodiments of the present disclosure;
FIG. 6 shows a schematic diagram of an implementation principle of an information prediction method according to another embodiment of the present disclosure;
FIG. 7 shows a flowchart of a method of training an autonomous driving model according to embodiments of the present disclosure;
FIG. 8 shows a structural block diagram of an information prediction apparatus according to embodiments of the present disclosure;
FIG. 9 shows a structural block diagram of an apparatus of training an autonomous driving model according to embodiments of the present disclosure; and
FIG. 10 shows a block diagram of an electronic device used to implement an information prediction method or a method of training an autonomous driving model according to embodiments of the present disclosure.

### DETAILED DESCRIPTION OF EMBODIMENTS

Exemplary embodiments of the present disclosure will be described below with reference to the accompanying drawings, including various details of embodiments of the present disclosure to facilitate understanding, and they should be considered merely exemplary. Similarly, for clarity and conciseness, descriptions of well-known functions and structures have been omitted in the following description.

A main challenge faced by the end-to-end autonomous driving system is how to establish robust environmental perception and representation. For example, the ability to establish the robust environmental perception and representation may be improved by introducing an aided perception task. Specifically, the existing autonomous driving system usually relies on multi-task aided planning to improve the environmental representation by introducing an aided supervision signal, these methods often require expensive and difficult-to-obtain, accurate perception annotations, that is, accurately annotated perception data is required to use the annotated data as the aided supervision signal. Therefore, there is a problem of time-consuming and labor-intensive, which will limit a deployment cost, scalability and practical applicability of the autonomous driving model to a certain extent.

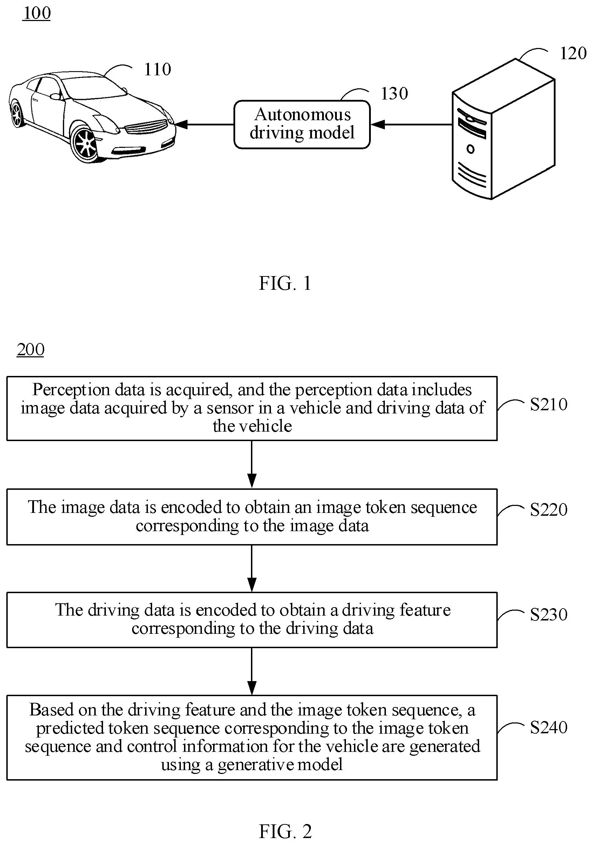

In order to solve the problems existing in the related technology, the present disclosure provides an information prediction method, an information prediction apparatus, a method of training an autonomous driving model, an apparatus of training an autonomous driving model, a device, a medium, a program product and an autonomous driving vehicle. The following will first describe application scenarios of the method and the apparatus provided by the present disclosure in conjunction with FIG. 1.

FIG. 1 shows a schematic diagram of an application scenario of an information prediction method and apparatus and a method and an apparatus of training an autonomous driving model according to embodiments of the present disclosure.

As shown in FIG. 1, an application scenario 100 of this embodiment may include a vehicle 110 and a server 120. The vehicle 110 may be integrated with an autonomous driving system. The server 120 may be, for example, a background management server used to support an operation of an intelligent driving system.

In an embodiment, the vehicle 110 may be further integrated with various types of sensors communicatively coupled to the autonomous driving system, such as a vision-based camera and a radar-based ranging sensor. The vision-based camera may include a monocular camera, a binocular stereo vision camera, a panoramic vision camera, and an infrared camera, etc. The radar-based ranging sensor may include, for example, a laser radar, a millimeter wave radar, an ultrasonic radar, etc. For example, the autonomous driving system may process data acquired by various types of sensors, so as to determine environmental information of the vehicle 110 and control information for the vehicle 110, so that the vehicle may drive according to the control information.

In an embodiment, the server 120 may provide an autonomous driving model 130 for the autonomous driving system, for example. The autonomous driving system may process the image data acquired by a sensor according to the autonomous driving model 130, and predict the control information for the vehicle in combination with the current driving data of the vehicle, so that the vehicle may automatically drive according to the control information. For example, the autonomous driving model 130 may take the prediction of control information as a primary task, take the image generation task as an auxiliary task, and synchronously output an image token sequence and predicted control information. By decoding the output image token sequence, an image may be generated.

In an embodiment, the server 120 may train the autonomous driving model 130 using the annotated data, so that the autonomous driving model has the ability to predict the control information. The server 120 may perform self-supervised training on the autonomous driving model 130 using the image data, so that the autonomous driving model has the ability to generate images, so as to execute the auxiliary task, and rely on the auxiliary task to improve the accuracy of the autonomous driving model 130 for executing the primary task.

In an embodiment, the autonomous driving system in the vehicle 110 may also send the data acquired by the sensor to the server 120, and the server 120 generates images and predicts control information. And then, the server 120 sends the predicted control information to the autonomous driving system, and the autonomous driving system controls the movement of the vehicle according to the control information.

It should be noted that the information prediction method provided by the present disclosure may be implemented by the vehicle or the autonomous driving system in the vehicle, or by the server 120. Correspondingly, the information prediction apparatus provided by the present disclosure may be provided in the vehicle or the autonomous driving system included in the vehicle, or in the server 120. The method of training the autonomous driving model provided by the present disclosure may be implemented by the server 120. Correspondingly, the apparatus of training the autonomous driving model provided by the present disclosure may be provided in the server 120.

It should be understood that the number and type of vehicles 110 and servers 120 shown in FIG. 1 are merely illustrative. There may be any number and type of vehicles 110 and servers 120 as desired in practice.

The information prediction method provided by the present disclosure will be described in detail with reference to FIG. 2 to FIG. 6.

FIG. 2 shows a flowchart of an information prediction method according to embodiments of the present disclosure.

As shown in FIG. 2, the information prediction method 200 of this embodiment may include operation S210 to operation S240.

In operation S210, perception data is acquired. The perception data includes at least image data acquired by a sensor in a vehicle and driving data of the vehicle.

According to embodiments of the present disclosure, the perception data may be acquired in real-time in a process of performing the information prediction method. The driving data of the vehicle may include one or more of navigation data at the current moment, speed at the current moment, and control information for the vehicle at the current moment. The control information may include one or more of an accelerator pedal angle, a brake pedal angle, a steering wheel rotation direction and a steering wheel rotation angle. The driving data may be acquired, for example, by the vehicle control system in the vehicle, or by the autonomous driving system in the vehicle, which is not limited in the present disclosure. The image data acquired by the sensor may include, for example, an environmental image at the current moment captured by a camera in the vehicle.

In an embodiment, the acquired perception data may include image data and driving data acquired at historical moments (such as one or more historical moments), in addition to image data and driving data acquired at the current moment. The image data at the historical moments and the image data at the current moment may form an image data sequence, and the driving data at the historical moments and the driving data at the current moment may form a driving data sequence.

In operation S220, the image data is encoded to obtain an image token sequence corresponding to the image data.

According to embodiments of the present disclosure, for example, the environmental image may be partitioned to obtain a plurality of image patches. Each image patch may be encoded into a token. By encoding the plurality of image patches obtained through partitioning, a token sequence may be obtained, which is referred to as an image token sequence. For example, a two-dimensional convolutional layer may be used to encode each image patch to obtain a token.

When an image data sequence is acquired, each image data in the image data sequence may be encoded to obtain a token sequence, resulting in a total of a plurality of token sequences. Then, according to an acquisition order of image data, the plurality of token sequences are concatenated to obtain the image token sequence corresponding to the image data sequence.

In operation S230, the driving data is encoded to obtain a driving feature corresponding to the driving data.

For example, the driving data may be represented by a string of numbers, which may include a speed of the vehicle, two-dimensional coordinates of a target point in a navigation path, the pedal angle of the vehicle accelerator, and so on. For example, the driving data may be encoded by using an embedding layer, so as to map the driving data into a vector to obtain the driving feature.

When a driving data sequence is acquired, the driving data at each moment in the driving data sequence may be encoded to obtain a feature. A plurality of features are obtained in total for the driving data sequence. And then, according to the acquisition order of driving data, the plurality of features are concatenated to obtain the driving feature corresponding to the driving data sequence.

In operation S240, based on the driving feature and the image token sequence, a predicted token sequence corresponding to the image token sequence and control information for the vehicle are generated using a generative model.

For example, the driving feature and the image token sequence may be concatenated to obtain an input feature, and the input feature may be input into the generative model to obtain the predicted token sequence and the control information. The control information may refer to a control signal of the vehicle, which may include at least one of: an accelerator pedal angle, a brake pedal angle, a steering wheel rotation direction, or a steering wheel rotation angle.

In this embodiment, the generative model is a model that executes multiple tasks. The multiple tasks executed include an image generation task and a control information prediction task. The image generation task may be an image reconstruction task or an image prediction task, and the image generation task is an auxiliary task relative to the control information prediction task.

For example, the generative model may be Variational Auto Encoders (VAEs), Diffusion Models, or Autoregressive Models, etc. The autoregressive model may be, for example, a model based on a Transformer architecture, which is not limited in the present disclosure.

The image token sequence is set as a sequence Xₜ = (xₜ, ₁, x_{t, 2}, ... , x_{t, n}) corresponding to the image data at the t^{th} moment. The predicted token sequence generated by the generative model is a predicted sequence X_{t'} = (xₜ, _{1'}, x_{t, 2'},..., x_{t, n'}) corresponding to the image data at the t^{th} moment, or, according to an embodiment that is not part of the claimed invention, a predicted sequence Xₜ₊₁=₍x_{t+1,1}, x_{t+1,2}, ... , x_{t+1, n}) corresponding to the image data at the (t+1)^{th} moment.

After receiving the control information, the autonomous driving system in the vehicle determines a driving parameter according to the control information, and controls the vehicle driving according to the driving parameter.

In embodiments of the present disclosure, by introducing an auxiliary task of predicting the image token sequence to predict the control information for the vehicle, robust environmental perception and representation may be established in the process of predicting the control information. As the auxiliary task may be executed with the acquired image as a supervision signal, there is no need to rely on precise perceptual annotation, which may effectively reduce the difficulty of executing the auxiliary task, facilitate the wide deployment of the control information prediction task, and improve the scalability and practical applicability of the control information prediction task.

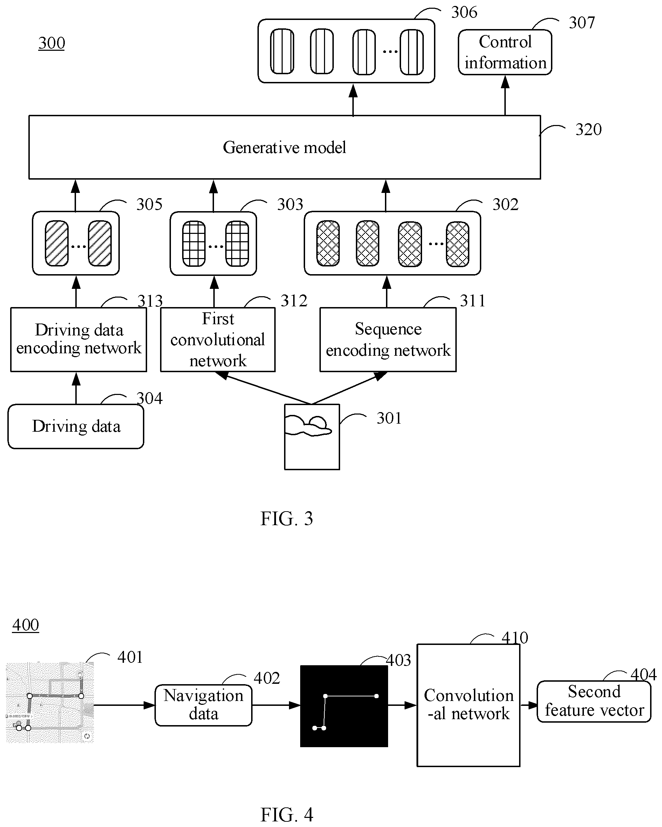

FIG. 3 shows a schematic diagram of an implementation principle of an information prediction method according to embodiments of the present disclosure.

In an embodiment, in the process of encoding the image data to an image token sequence, some fine-grained information in the image may be lost, such as association information between image patches corresponding to two tokens, and the influence of a small-scale object such as traffic light on the prediction accuracy of control information. In order to further ensure the prediction accuracy of control information and enable the auxiliary task to better assist the execution of the primary task (predicting control information), this embodiment may extract the image feature of the image data, that is, extracting the feature by taking the image data as a unit, and taking the extracted feature as a part of the input data for the generative model, while encoding the image data to obtain the image token sequence.

As shown in FIG. 3, in an embodiment 300, a sequence encoding network 311 may be used to encode image data 301, so as to obtain an image token sequence 302. This embodiment 300 may further use a first convolutional network 312 to extract the image feature of the image data 301, so as to obtain a first feature vector 303 representing the image feature. This embodiment 300 may further use a driving data encoding network 313 to encode driving data 304, so as to obtain a driving feature 305.

After obtaining the driving feature 305, the first feature vector 303 and the image token sequence 302, a generative model 320 may be used to execute the auxiliary task and the primary task based on these features, that is, generating a predicted token sequence 306 and control information for the vehicle 307. For example, the driving feature 305, the first feature vector 303 and the image token sequence 302 may be concatenated as an input feature, which is input into the generative model 320, and the predicted token sequence 306 and control information 307 are output by the generative model 320.

In an embodiment, the generative model 320 may be an autoregressive model. When executing the task, the driving feature 305 and the first feature vector 303 may be concatenated and input into the generative model 320, and the generative model may predict to obtain a first token in the token sequence 306. Then, the driving feature 305, the first feature vector 303 and the first image token in the image token sequence 302 may be concatenated and input into the generative model 320, and the generative model may predict to obtain a second token in the token sequence 306. Following the same pattern, the token sequence 306 may be generated. Finally, the driving feature 305, the first feature vector 303 and the image token sequence 302 are concatenated and input into the generative model 320, and the generative model 320 may predict to obtain the control information 307.

In an embodiment, when the generative model 320 predicts a single token, the generated data is a probability vector, which includes a probability of each of the plurality of tokens. This embodiment may use the token with the highest probability in the probability vector as the predicted token. The token corresponding to the image patch may refer to a visual vocabulary, and the number of probability values included in the probability vector may refer to the number of predetermined visual vocabulary.

In an embodiment, the driving data encoding network 313 may, for example, adopt an embedding layer structure. This embodiment may also use any non-serialized network to replace the first convolutional network 312. The first convolutional network 312 may, for example, adopt network architectures such as VGG, ResNet, MobileNet, etc., and may adopt lightweight convolutional network architectures, etc. The present disclosure does not limit this.

The function of the first convolutional network 312 is to map image data into image features. For example, the first feature vector may be obtained by flattening the image features of the original image with a spatial resolution of 1/2m.

In an embodiment, the driving data may include at least two parts of data: the driving parameter of the vehicle and the navigation data of the vehicle. This embodiment may use different networks to encode different parts of the driving data, so as to improve the expression ability of the encoded driving feature. This is because using different encoding principles for different types of data may improve encoding accuracy.

For example, navigation data may be a navigation map, that is, the navigation data may be image modal data. This embodiment may use the convolutional network to encode navigation data, so as to obtain a second feature vector representing the navigation data. For example, the driving parameter may include at least one of the following parameters: a vehicle speed, a scalar acceleration, a rotation angle, etc. This embodiment may use a fully connected layer or a multi-layer perceptron to encode the driving parameter, thereby obtaining a third feature vector representing the driving parameter. Correspondingly, the aforementioned driving feature includes the second feature vector and the third feature vector in this embodiment.

FIG. 4 shows a schematic diagram of a principle of encoding navigation data according to embodiments of the present disclosure.

As shown in FIG. 4, in an embodiment 400, the navigation data may include positions of at least two target points on a navigation path. The positions may be, represented by two-dimensional coordinates, for example, so as to represent the positions of the target points on the road plane where the vehicle is located. For example, the at least two target points may be two target points, one of the two target points is the target point corresponding to the current position of the vehicle, and the other of the two target points is the next passing point of the vehicle on the navigation path. The at least two target points may also be multiple target points to represent the entire navigation path or a sub path close to the vehicle on the navigation path.

In other words, in an embodiment 400, the positions of at least two target points on the navigation path may be extracted from the navigation map 401 as the navigation data 402, thereby reducing the interference of information other than the navigation path in the navigation map 401 on the prediction task, and improving the prediction accuracy of control information.

For example, in the embodiment 400, after obtaining navigation data 402, a mask image 403 representing the path formed by at least two target points may be generated based on the positions of the at least two target points. By converting to a mask image, it is beneficial to use the convolutional network to extract features of the navigation path. After obtaining the mask image 403, the convolutional network 410 may be used to encode the mask image 403, thereby obtaining the second feature vector 404 representing the navigation data.

The convolutional network 410 that encodes the mask image 403 may be, for example, ResNet series network, VGG series network, etc. The present disclosure does not limit this. This embodiment may input the mask image 403 into the convolutional network 410, and an image feature of tensor form is output by the convolutional network. By unfolding the image feature, the second feature vector 404 may be obtained.

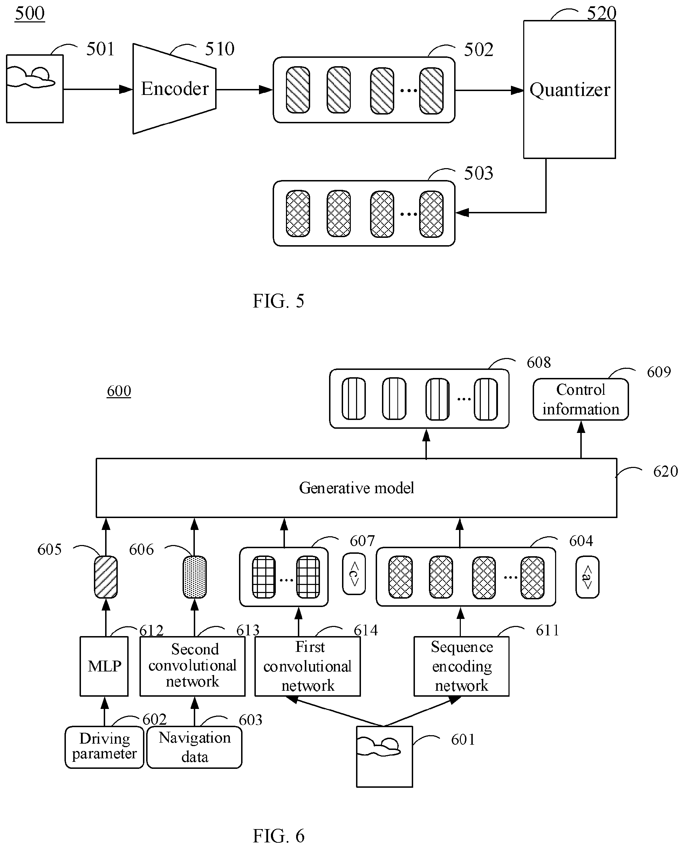

FIG. 5 shows a schematic diagram of a principle of encoding image data to obtain an image token sequence according to embodiments of the present disclosure.

In an embodiment, for example, in the process of encoding the image data to obtain an image token sequence, quantization processing may be performed, so as to discretize the obtained image token sequence, thereby facilitating probability calculation in the prediction task.

For example, in an embodiment 500, the encoder 510 may be used to encode the image data 501, so as to map pixel values of the image data to a more efficient representation space, and achieve the purpose of compressing information, thereby improving the computational efficiency of the generative model. By using the encoder 510 for encoding, an encoded feature sequence 502 may be obtained. Subsequently, the quantizer 520 is used to quantize the encoded feature sequence 502, the continuous representation of the encoded feature sequence is mapped to integer values for discretization representation. By quantization processing, the image token sequence 503 is obtained.

In an embodiment, the input of the encoder 510 may be a series of pixels obtained by pixel segmentation of the image. For example, the encoder 510 may adopt a two-dimensional convolutional layer structure. For example, if the processing of pixels by the encoder may be represented by a function *ε*(·), the following equation (1) may be used to obtain the encoded feature sequence *f* 502. It should be noted that in the actual processing, the variable of the input function *ε*(·) is the pixel sequence obtained by partitioning the image I.$f = E \left(I\right)$ equation (1)

In an embodiment, the quantizer 520 may be, for example, a quantization layer that has pre-learned a codebook *e* ∈ *R*^{*K*×}*^{C},* where the codebook contains K vectors, K is the number of pre-determined visual vocabulary, and C is the embedding dimension of each pre-determined visual vocabulary. The quantizer 520 may use a quantization function 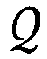 (·) to perform quantization processing on the encoded feature sequence *f* 502. For example, for the encoded feature *f*^{(*i,j*)} corresponding to the pixel in an i^{th} row and a j^{th} column of the image I, the following equation (2) may be used for quantization processing to obtain a quantized feature *x*^{(*i,j*)} corresponding to the encoded feature *f*^{(*i*,*j*)}, the quantized feature *x*^{(*i,j*)} serves as an image token. In this way, each encoded feature may be mapped to a vector included in the codebook *e* closest to the encoded feature, that is *x*^{(*i,j*)} ∈ [*K*], where *e*(*k*) represents the k^{th} vector of the codebook e.${x}^{\left(i, j\right)} = {argmin}_{k ∈ \left[K\right]} {\left|e\left(k\right)-{f}^{\left(i, j\right)}\right|}_{2}$ equation (2)

In an embodiment, the step of encoding image data to obtain an image token sequence may be implemented, for example, using data compression techniques such as Vector Quantization (VQ). For example, the encoder in the pre-trained Vector Quantized Generative Adversarial Network (VQGAN) or the encoder in the Vector Quantized Variational Auto Encoder (VQVAE) may be used to encode the image data, so as to map the image data to a discretized vector representation in a VQ space. The present disclosure does not limit this.

In an embodiment, the following equation (3) may be used to encode the image ***I**ₜ* at the t^{th} moment to obtain a discretized image token sequence.${x}_{t} = {F}_{q} \left({I}_{t}\right) ∈ {R}^{n}$ equation (3)

The encoding network 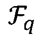 = 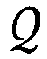 (*ε*(·)) includes an encoder and a quantizer, the encoding network exhibits, for example, a spatial down-sampling rate of 16 times, and *n* = *h* × *w, h* and *W* are the pixel height and the pixel width of the image I, respectively. In this way, after processing by the encoding network, the bit compression ratio of image data I is 16 × 16 × 3 × 8/log₂ *K*, where 3 is the number of channels per pixel, and 8 is the number of bits occupied by each pixel.

FIG. 6 shows a schematic diagram of an implementation principle of an information prediction method according to another embodiment of the present disclosure.

According to embodiments of the present disclosure, when using a generative model to execute prediction tasks, tags are added into the sequence input to the generative model, so as to prompt the generative model to execute the auxiliary task and the primary task.

For example, if the auxiliary task is a task of regenerating the input image token sequence, that is, if the input image token sequence represents the image data at the t^{th} moment, the auxiliary task may be a task of predicting the token sequence representing the image data at the t^{th} moment. Then, a start tag is added at a head position of the image token sequence obtained through the above embodiments, so that the generative model predicts the first token in the token sequence representing the image data at the t^{th} moment based on this start tag. The start tag may be, for example, a pre-defined tag such as <c>, which is not limited in the present disclosure.

A query tag is added at a tail position of the image token sequence, so as to prompt the generative model that the image token sequences have been fully input and the primary task, that is, predicting the control information for the vehicle may be started. The query tag may be, for example, a pre-defined tag such as <a>. The present disclosure does not limit this.

In the claimed embodiment, the tags are added at the head position and the tail position of the image token sequence, so as to obtain the tagged token sequence. Then, for example, the driving feature obtained from the above embodiments may be concatenated with the tagged token sequence to obtain an input sequence of the generative model. And then, by inputting the input sequence into the generative model, the generative model generates a predicted token sequence (i.e., a token sequence representing the image data at the t^{th} moment) and control information.

In an embodiment, when executing the auxiliary task and the primary task, for example, the first feature vector representing the image feature obtained from the above embodiments may also be considered.

In an embodiment, the driving data may include the driving parameter and navigation data described above. The second convolutional network may be used to encode the navigation data, and MLP may be used to encode the driving parameter.

For example, as shown in FIG. 6, in an embodiment 600, the acquired perception data includes the image data 601 and the driving data. The perception data is processed through an autonomous driving model, so as to generate the predicted token sequence and the control information for the vehicle.

The autonomous driving model includes an encoding layer and a generative model 620. The encoding layer includes networks for encoding the image data 601, the driving parameter 602 and the navigation data 603, respectively.

The encoding layer includes a sequence encoding network 611 for encoding the image data 601 to obtain the image token sequence 604 corresponding to the image data 601.

The encoding layer further includes a driving data encoding network. The driving data encoding network is used to encode the driving data to obtain the driving feature. In an embodiment, the driving data may include the driving parameter 602 and the navigation data 603. The driving data encoding network may include a multi-layer perceptron MLP 612 and a second convolutional network 613. The multi-layer perceptron MLP 612 is used to encode the driving parameter 602 to obtain a third feature vector 605. The second convolutional network 613 is used to encode the navigation data 603 to obtain a second feature vector 606.

For example, taking a driving parameter including a speed *vₜ* at the t^{th} moment as an example, the multi-layer perceptron MLP 612 may, for example, encode the driving parameter using the following equation (4) to obtain the third feature vector ***vₜ*** 605, where 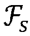 is the function used by the multi-layer perceptron.${v}_{t} = {F}_{s} \left({v}_{t}\right) ∈ {R}^{1 \times C}$ equation (4)

For example, the navigation data is set to include the positions of at least two target points on the navigation path, taking the principle described in the above embodiment 400 as an example, the second convolutional network 613 may use the following equation (5) to obtain the second feature vector *rₜ,* where *Mₜ* is a mask image representing the path formed by at least two target points, generated based on the positions of at least two target points, and 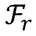 is the function used by the second convolutional network 613.${r}_{t} = {F}_{r} \left({M}_{t}\right) ∈ {R}^{1 \times C}$ equation (5)

In an embodiment, the encoding layer may further include a first convolutional network 614 for extracting the image feature of the image data 601 to obtain a first feature vector 607 representing the image feature. The first convolutional network 614 is a non-quantized branch that may be used to extract driving-related information from the image data 601. For example, the first convolutional network 614 may adopt a lightweight convolutional network 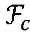 , so as to obtain the image feature of the image data with a spatial resolution of 1/64, which may be flattened and used as prompt information considered when predicting the control information. For example, for the image data *Iₜ* at the t^{th} moment, the first convolutional network 614 may use the following equation (6) to obtain the first feature vector *cₜ* 607, where *h_{c}* and *w_{c}* represent the pixel height and the pixel width of the image feature at the spatial resolution of 1/64, respectively.${c}_{t} = {F}_{c} \left({I}_{t}\right) ∈ {R}^{\left({h}_{c}\times {w}_{c}\right) \times C}$ equation (6)

In an embodiment, in the process of encoding perception data, learnable position information may be combined. The learnable position information is similar to the position tag added to the token when inputting into the Transformer architecture.

In an embodiment, after encoding the perception data, for example, the input sequence of the generative model 620 may be obtained based on each vector and sequence obtained by encoding.

For example, a start tag <c> may be added at the head position of the image token sequence 604, and a query tag <a> may be added at the tail position of the image token sequence 604, so as to obtain the tagged token sequence. Then, the obtained vector and sequence are sequentially input into the generative model in an order of (***v**ₜ, **r**ₜ, **c**ₜ,*<c>*, xₜ,*<a>), where the t^{th} moment refers to the current moment.

In an embodiment, the generative model 620 may, for example, use an autoregressive model. This is because the autoregressive model has the flexibility to accept diverse prompts, and series models (such as generative pre-training models GPT, etc.) have scalability. In this embodiment, (***v**ₜ, **r**ₜ, **c**ₜ,*<c>) may serve as the input sequence input into the generative model 620, and the generative model may obtain the probability vector of the first token in the predicted token sequence 608 by predicting based on the input sequence. This embodiment may use the token corresponding to the maximum probability value in the probability vector as the first token in the predicted token sequence. Then, this embodiment may input the (***v**ₜ, **r**ₜ, **c**ₜ,*<c>) and the first image token in *xₜ* as the input sequence into the generative model 620, and the generative model may obtain the probability vector of the second token in the predicted token sequence 608 by predicting. This embodiment may use the token corresponding to the maximum probability value in the probability vector as the second token in the predicted token sequence. Following the same pattern, the (***v**ₜ, **r**ₜ, **c**ₜ,*<c>) and all image tokens other than the last image token in *xₜ* may be input into the generative model, so as to obtain the last token in the predicted token sequence 608. Finally, (***v**ₜ, **r**ₜ, **c**ₜ,*<c>*, x_{t,}*<a>) as an input sequence is input into the generative model, and the generative model obtains the control information 609 for the vehicle at the (t+1)^{th} moment by predicting.

Through embodiments of the present disclosure, with the help of an autonomous driving model, end-to-end prediction of control information may be achieved. Moreover, as the image generation task is used as an auxiliary task to guide the implementation of the primary task, there is no need to rely on complex perception tasks and expensive perception annotations, and it is possible to provide a low-cost and scalable solution for end-to-end autonomous driving technology.

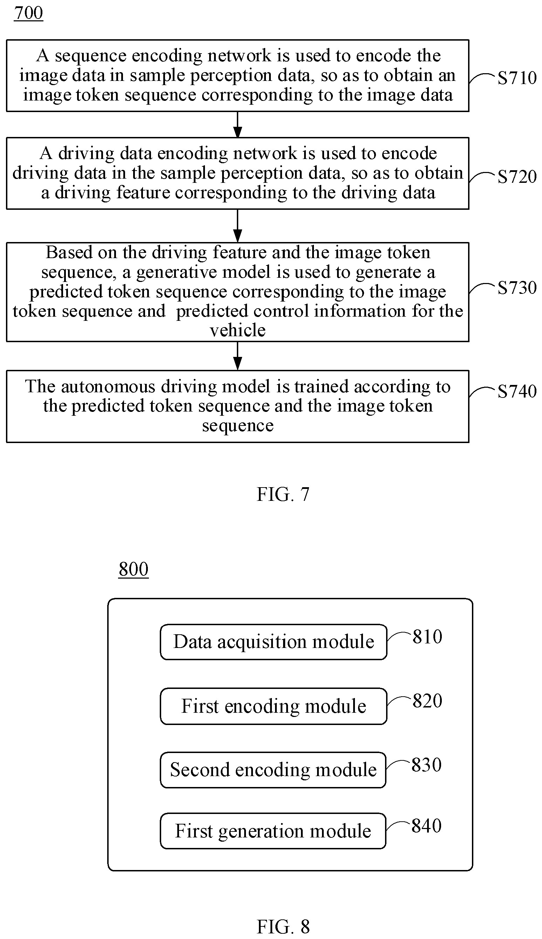

In order to facilitate the implementation of the information prediction method in embodiments of the present disclosure, the present disclosure further provides a method of training an autonomous driving model, which will be described in detail below with reference to FIG. 7.

FIG. 7 shows a flowchart of a method of training an autonomous driving model according to embodiments of the present disclosure.

As shown in FIG. 7, the method 700 of training the autonomous driving model of this embodiment may include operation S710 to operation S740. The autonomous driving model includes an encoding layer and a generative model. The encoding layer includes a sequence encoding network and a driving data encoding network.

In operation S710, a sequence encoding network is used to encode image data in sample perception data, so as to obtain an image token sequence corresponding to the image data.

According to embodiments of the present disclosure, the sample perception data includes image data acquired at historical moments and driving data of the vehicle at the moment when the image data is acquired.

The sequence encoding network may include, for example, a structure for partitioning an image and a two-dimensional convolutional layer, so as to encode the image data in the sample perception data using a principle similar to those described in the above operation S220 to obtain an image token sequence. In an embodiment, the sequence encoding network may use vector quantization compression technology to encode the image data.

In operation S720, a driving data encoding network is used to encode driving data in the sample perception data, so as to obtain a driving feature corresponding to the driving data.

According to embodiments of the present disclosure, the implementation principle of operation S720 is similar to the implementation principle of operation S220 described above, which will not be repeated here. The driving data encoding network may adopt an embedding layer structure, or as described in the above embodiment 600, which may include an MLP and a convolutional network.

In operation S730, based on the driving feature and the image token sequence, a generative model is used to generate a predicted token sequence corresponding to the image token sequence and a predicted control information for the vehicle.

According to embodiments of the present disclosure, the implementation principle of operation S730 is similar to the implementation principle of operation S230 described above. It should be noted that in a case that the generative model is an autoregressive model, the generative model generates a series of probability vectors that correspond one-to-one with the tokens in the predicted token sequence. In this embodiment, the token corresponding to the maximum probability value in the probability vector may be used as the token corresponding to the probability vector in the predicted token sequence.

In operation S740, the autonomous driving model is trained according to the predicted token sequence and the image token sequence.

For example, this embodiment may determine the loss value of the autonomous driving model based on a difference between the predicted token sequence and the image token sequence. Then, the autonomous driving model is trained with the goal of minimizing the loss value.

In an embodiment, in a case that the generative model generates a series of probability vectors, it is possible to determine the loss value of the autonomous driving model according to the probability value corresponding to the i^{th} image token in the image token sequence in the i^{th} probability vector. For example, a classification loss function may be used to calculate the loss value.

For example, for an embodiment in which the generative model is an autoregressive model, considering the principle of autoregressive modeling is that a series of discrete tags are given, the probability of generating the i^{th} discrete tag depends on all tag sequences located before the i^{th} discrete tag. Therefore, taking the cross entropy loss function as an example, this embodiment may use the following equation (7) to determine the loss value 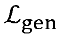 of the autonomous driving model based on the probability vector, where 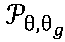 (·) is the probability value for the i^{th} image token in the i^{th} probability vector generated for the image at the t^{th} moment.${L}_{gen} = - {\sum }_{i = 1}^{n} log {P}_{θ , {θ}_{g}} \left({x}_{t , i}\left|{x}_{t , j < i}\right.\right)$ equation (7)

It should be noted that this probability value 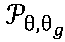 (·) is related to the driving data at the t^{th} moment, which is not reflected in equation (7). N is the number of image tokens in the image token sequence.

Through this embodiment, as the image data itself in the sample perception data is used as the supervisory signal, without the need for precise perception annotated data, therefore, self-supervised training of the autonomous driving model may be achieved.

In an embodiment, when training the autonomous driving model, for example, the network parameters included in the sequence encoding network in the autonomous driving model may not be adjusted, so as to improve the stability of the image token sequence as the supervision signal, which is conducive to improving the training accuracy and training efficiency of the autonomous driving model.

In an embodiment, the sample perception data may include, for example, perception data at several moments before the t^{th} moment in addition to the perception data at the t^{th} moment. For perception data at each moment, the image token sequence and the driving feature may be obtained in a similar manner. When the generative model obtains the predicted token sequence and control information at the (t+1)^{th} moment by predicting, it is possible to simultaneously consider the perception data at several moments before the t^{th} moment, so as to improve prediction accuracy.

For example, if the sample perception data includes perception data from the first moment to the T^{th} moment among historical moments, in the process of training the autonomous driving model, a predicted token sequence corresponding to the image data at the first moment may be obtained by predicting according to the perception data at the first moment. According to this predicted token sequence, a loss value may be obtained. Then, according to the perception data at the first moment and the perception data at the second moment, a predicted token sequence corresponding to the image data at the second moment is obtained by predicting. According to this predicted token sequence, a loss value may be obtained. Following the same pattern, T loss values may be obtained, and in this embodiment, a sum of the T loss values may be used as the loss value for the token sequence generated by the autonomous driving model. The autonomous driving model is trained with the goal of minimizing the loss value.

In an embodiment, a supervision signal may be added to the primary task (predicting control information) executed by the autonomous driving model. For example, the sample perception data may further include real control information. For example, if the sample perception data includes perception data at the t^{th} moment, the perception data at the t^{th} moment may have a label indicating real control information at the (t+1)^{th} moment. This embodiment may also consider the difference between the real control information and the predicted control information when training the autonomous driving model. For example, a regression loss function may be used to determine the loss value of the autonomous driving model for generating the predicted control information. For example, the real control information is set as ***a***_{*t*+1}, and 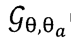 (***x***_{≤t}) is the predicted control information, this embodiment may use the following equation (8) to calculate the loss value 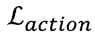 for generating the predicted control information. It should be noted that the predicted control information 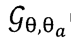 (***x**ₜ*) is also related to the driving data at the t^{th} moment, as well as the image data and the driving data before the t^{th} moment, which are not reflected in the expression here. The regression loss function may include, for example, L1 loss function, L2 loss function, etc., which are not limited in the present disclosure.${L}_{action} = {\left|{G}_{θ , {θ}_{a}}\left({x}_{t}\right)-{a}_{t + 1}\right|}_{1}$ equation (8)

For example, if the sample perception data includes perception data from the first moment to the T^{th} moment among historical moments, in the process of training the autonomous driving model, the control information at the second moment may be obtained by predicting according to the perception data at the first moment. According to the control information obtained by predicting and the real control information at the second moment, a loss value for generating control information may be obtained. Then, according to the perception data at the first moment and the perception data at the second moment, the control information at the third moment is obtained by predicting. According to the predicted control information and the real control information at the third moment, a loss value for generating control information may be obtained. Following the same pattern, T loss values may be obtained, and in this embodiment, a sum of T loss values may be used as the loss value of the autonomous driving model for generating the control information. The autonomous driving model is trained with the goal of minimizing the loss value.

In an embodiment, both the loss value of the autonomous driving model for generating control information and the loss value of the autonomous driving model for generating the predicted token sequence may be considered. For example, a weighted sum of the two loss values may be used as the total loss value of the autonomous driving model. The autonomous driving model is trained with the goal of minimizing the total loss value. The weights used for weighting may be set as desired in practice. For example, considering that the task of generating the predicted token sequence is an auxiliary task, a smaller weight may be assigned to the loss value. The present disclosure does not limit this.

In an embodiment, the above encoding layer may include a first convolutional network. The first convolutional network is similar to the first convolutional network in the above embodiment 600. This embodiment may use a first convolutional network to extract the image feature of the image data to obtain a first feature vector representing the image feature. Then, based on the driving feature, the first feature vector and the image token sequence, the generative model is used to generate the predicted token sequence and the predicted control information.

In an embodiment, the driving data may include a historical driving parameter of the vehicle and historical navigation data of the vehicle. The driving data encoding network may include the second convolutional network and the multi-layer perceptron as described in the above embodiment 600. The second convolutional network may be used to encode the historical navigation data to obtain a second feature vector representing the navigation data. By using the multi-layer perceptron to encode the historical driving parameter, a third feature vector representing the driving parameter may be obtained. The driving feature described above include the second feature vector and the third feature vector.

In an embodiment, the sequence encoding network includes an encoder and a quantizer. The sequence encoding network may adopt a principle similar to the principle described in the above embodiment 500 to encode the image data, so as to obtain the image token sequence.

In an embodiment, the principle of generating the predicted token sequence and the predicted control information by the generative model is similar to the principle described in the above embodiment 600, which will not be repeated here.

In an embodiment, the method of training the autonomous driving model may train the autonomous driving model through two tasks: one is the autoregressive generation task of the next token (i.e., the task of generating a predicted token sequence), and the other is the action prediction (i.e., the task of predicting control information) of the planner (such as braking, throttle, steering wheel, etc.). Except for different output heads, these two tasks share most of the network parameters. In this way, when optimizing shared parameters for generating tasks, the model will learn well the dependency relationships between the input tokens, thereby establishing a good environmental representation and facilitating the implementation of action prediction task.

Based on the information prediction method provided in the present disclosure, the present disclosure further provides an information prediction apparatus. The apparatus will be described in detail below in conjunction with FIG. 8.

FIG. 8 shows a structural block diagram of an information prediction apparatus according to embodiments of the present disclosure.

As shown in FIG. 8, the information prediction apparatus 800 of this embodiment may include a data acquisition module 810, a first encoding module 820, a second encoding module 830, and a first generation module 840.

The data acquisition module 810 is used to acquire perception data including image data acquired by a sensor in a vehicle and driving data of the vehicle. In an embodiment, the data acquisition module 810 may be used to perform the operation S210 described above, which will not be repeated here.

The first encoding module 820 is used to encode the image data to obtain an image token sequence corresponding to the image data. In an embodiment, the first encoding module 820 may be used to perform the operation S220 described above, which will not be repeated here.

The second encoding module 830 is used to encode the driving data to obtain a driving feature corresponding to the driving data. In an embodiment, the second encoding module 830 may be used to perform the operation S230 described above, which will not be repeated here.

The first generation module 840 is used to generate a predicted token sequence corresponding to the image token sequence and a control information for the vehicle based on driving feature and the image token sequence by using a generative model. In an embodiment, the first generation module 840 may be used to perform the operation S240 described above, which will not be repeated here.

According to embodiments of the present disclosure, the image token sequence is a discrete feature of the image data. The information prediction apparatus 800 may further include a first feature extraction module used to extract an image feature of the image data using a first convolutional network to obtain a first feature vector representing the image feature. The first generation module 840 described above may be specifically used to generate the predicted token sequence and the control information using the generative model based on the driving feature, the first feature vector and the image token sequence.

According to embodiments of the present disclosure, the driving data includes a driving parameter of the vehicle and navigation data of the vehicle. The second encoding module 830 described above may include a first encoding submodule and a second encoding submodule. The first encoding submodule is used to encode the navigation data using a second convolutional network to obtain a second feature vector representing the navigation data. The second encoding submodule is used to encode the driving parameter using a multi-layer perceptron to obtain a third feature vector representing the driving parameter. The driving feature includes a second feature vector and a third feature vector.

According to embodiments of the present disclosure, the navigation data may include positions of at least two target points on a navigation path. The first encoding submodule mentioned above may include an image generation unit and an image encoding unit. The image generation unit is used to generate a mask image representing a path formed by the at least two target points based on the positions of the at least two target points. The image encoding unit is used to encode the mask image using the second convolutional network to obtain the second feature vector.

According to embodiments of the present disclosure, the first encoding module 820 may include a third encoding submodule and a first quantization submodule. The third encoding submodule is used to encode the image data using an encoder to obtain an encoded feature sequence. The first quantization submodule is used to quantize the encoded feature sequence using a quantizer to obtain the image token sequence.

According to embodiments of the present disclosure, the first generation module may include a first tag addition submodule, a first sequence acquisition submodule, and a first generation submodule. The first tag addition submodule is used to add a start tag at a head position of the image token sequence and add a query tag at a tail position of the image token sequence, so as to obtain a tagged token sequence. The first sequence acquisition submodule is used to obtain an input sequence of the generative model based on the driving feature and the tagged token sequence. The first generation submodule is used to input the input sequence into the generative model to obtain the predicted token sequence and the control information generated by the generative model.

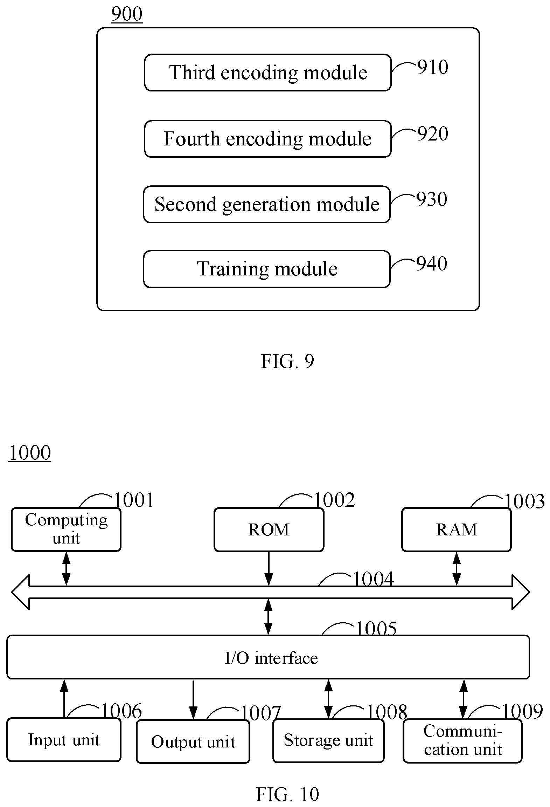

Based on the method of training the autonomous driving model provided in the present disclosure, the present disclosure further provides an apparatus of training an autonomous driving model. The apparatus will be described in detail below in conjunction with FIG. 9.

FIG. 9 shows a structural block diagram of an apparatus of training an autonomous driving model according to embodiments of the present disclosure.

As shown in FIG. 9, the apparatus 900 of training the autonomous driving model of this embodiment may include a third encoding module 910, a fourth encoding module 920, a second generation module 930 and a training module 940. The autonomous driving model includes an encoding layer and a generative model. The encoding layer includes a sequence encoding network and a driving data encoding network.

The third encoding module 910 is used to encode the image data in the sample perception data using a sequence encoding network, so as to obtain an image token sequence corresponding to the image data. In an embodiment, the third encoding module 910 may be used to perform the operation S710 described above, which will not be repeated here.

The fourth encoding module 920 is used to encode the driving data in the sample perception data using a driving data encoding network, so as to obtain a driving feature corresponding to the driving data. In an embodiment, the fourth encoding module 920 may be used to perform the operation S720 described above, which will not be repeated here.

The second generation module 930 is used to generate a predicted token sequence corresponding to the image token sequence and a predicted control information for the vehicle using a generative model based on the driving feature and the image token sequence. In an embodiment, the second generation module 930 may be used to perform the operation S730 described above, which will not be repeated here.

The training module 940 is used to train the autonomous driving model based on the predicted token sequence and the image token sequence. In an embodiment, the training module 940 may be used to perform the operation S740 described above, which will not be repeated here.

According to embodiments of the present disclosure, the sample perception data further includes a real control information. The training module 940 may further be used to train the autonomous driving model based on a difference between the real control information and the predicted control information.

According to embodiments of the present disclosure, the training module 940 is specifically used to train other model structures in the autonomous driving model other than the sequence encoding network.

According to embodiments of the present disclosure, the encoding layer further includes a first convolutional network. The apparatus 900 of training the autonomous driving model may further include a second feature extraction module used to extract an image feature of the image data using the first convolutional network to obtain a first feature vector representing the image feature. The second generation module 930 described above is specifically used to generate the predicted token sequence and the predicted control information using the generative model based on the driving feature, the first feature vector and the image token sequence.

According to embodiments of the present disclosure, the driving data includes a historical driving parameter of the vehicle and historical navigation data of the vehicle, and the driving data encoding network includes a second convolutional network and a multi-layer perceptron. The fourth encoding module 920 mentioned above may include a fourth encoding submodule and a fifth encoding submodule. The fourth encoding submodule is used to encode the historical navigation data using the second convolutional network to obtain a second feature vector representing the navigation data. The fifth encoding submodule is used to encode the historical driving parameter using the multi-layer perceptron to obtain a third feature vector representing the driving parameter. The driving feature includes the second feature vector and the third feature vector.

According to embodiments of the present disclosure, the sequence encoding network includes an encoder and a quantizer. The third encoding module 910 mentioned above may include a sixth encoding submodule and a second quantization submodule. The sixth encoding submodule is used to encode the image data using the encoder to obtain an encoded feature sequence. The second quantization submodule is used to quantize the encoded feature sequence using the quantizer to obtain the image token sequence. The sequence encoding network processes the image data based on a vector quantization compression technology.

According to embodiments of the present disclosure, the second generation module 930 may include a second tag addition submodule, a second sequence acquisition submodule, and a second generation submodule. The second tag addition submodule is used to add a start tag at a head position of the image token sequence and add a query tag at a tail position of the image token sequence, so as to obtain a tagged token sequence. The second sequence acquisition submodule is used to obtain an input sequence of the generative model based on the driving feature and the tagged token sequence. The second generation submodule is used to input the input sequence into the generative model, so as to obtain the predicted token sequence and the predicted control information generated by the generative model. The generative model includes an autoregressive model.

It should be noted that collecting, storing, using, processing, transmitting, providing, disclosing, and applying etc. of the personal information of the user involved in the present disclosure all comply with the relevant laws and regulations, are protected by essential security measures, and do not violate the public order and morals. In the technical solution of the present disclosure, the user's authorization or consent is acquired before the user's personal information is acquired or collected.

According to embodiments of the present disclosure, the present disclosure further provides an electronic device, a readable storage medium, and a computer program product.

FIG. 10 shows a schematic block diagram of an exemplary electronic device 1000 that may be used to implement an information prediction method or an method of training an autonomous driving model according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the electronic device 1000 may include computing unit 1001, which may perform various appropriate actions and processing based on a computer program stored in a read-only memory (ROM) 1002 or a computer program loaded from a storage unit 1008 into a random access memory (RAM) 1003. Various programs and data required for the operation of the electronic device 1000 may be stored in the RAM 1003. The computing unit 1001, the ROM 1002 and the RAM 1003 are connected to each other through a bus 1004. An input/output (I/O) interface 1005 is further connected to the bus 1004.

Various components in the electronic device 1000 are connected with I/O interface 1005, including an input unit 1006, such as a keyboard, a mouse, etc.; an output unit 1007, such as various types of displays, speakers, etc.; a storage unit 1008, such as a magnetic disk, an optical disk, etc.; and a communication unit 1009, such as a network card, a modem, a wireless communication transceiver, etc. The communication unit 1009 allows the electronic device 1000 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 1001 may perform the various methods and processes described above, such as the information prediction method. For example, in some embodiments, the information prediction method may be implemented as a computer software program that is tangibly contained on a machine-readable medium, such as a storage unit 1008. In some embodiments, part or all of a computer program may be loaded and/or installed on the electronic device 1000 via the ROM 1002 and/or the communication unit 1009. When the computer program is loaded into the RAM 1003 and executed by the computing unit 1001, one or more steps of the information prediction method described above may be performed. Alternatively, in other embodiments, the computing unit 1001 may be configured to perform the information prediction method in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also referred to as a cloud computing server or cloud host, which is a host product in the cloud computing service system to solve the defects of difficult management and weak business scalability in traditional physical hosts and VPS services ("Virtual Private Server", or "VPS" for short). The server may also be a server of a distributed system, or a server combined with a blockchain.

Based on the electronic device implementing the information prediction method provided by the present disclosure, the present disclosure further provides an autonomous driving vehicle, which includes an electronic device for implementing the information prediction method.

In an embodiment, the autonomous driving vehicle may further include a sensor for acquiring image data, and the electronic device may predict control information at a next moment based on the image data and driving data of the autonomous driving vehicle, so as to control the driving of the autonomous driving vehicle based on the control information.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

## Claims

1. An information prediction method (200), comprising:
acquiring (S210) perception data comprising image data (301, 601) acquired by a sensor in a vehicle (110) and driving data of the vehicle (110);
encoding (S220) the image data (301, 601) to obtain an image token sequence corresponding to the image data (301, 601);
encoding (S230) the driving data to obtain a driving feature corresponding to the driving data; and
generating (S240), using a generative model, a predicted token sequence (306, 608) corresponding to the image token sequence and a control information (307, 609) for the vehicle (110) based on the driving feature and the image token sequence,
wherein the image token sequence comprises a sequence corresponding to the image data (301, 601) at a t^{th} moment, the predicted token sequence (306, 608) comprises a predicted sequence corresponding to the image data (301, 601) at the t^{th} moment, the control information (307, 609) comprises control information for the vehicle (110) at a (t+1)^{th} moment obtained by predicting using the generative model, the t^{th} moment is a current moment, and the control information (307, 609) is used to determine a driving parameter and control the vehicle (110) driving according to the driving parameter,
wherein the generating (S240), using a generative model, a predicted token sequence (306, 608) corresponding to the image token sequence and a control information (307, 609) for the vehicle (110) based on the driving feature and the image token sequence, comprises:
adding a start tag at a head position of the image token sequence and adding a query tag at a tail position of only the image token sequence, so as to obtain a tagged token sequence, wherein the start tag is used for the generative model to predict a first token in the predicted sequence representing the image data (301, 601) at the t^{th} moment based on the start tag, and the query tag is used to prompt the generative model that the image token sequence has been fully input and the prediction of the control information for the vehicle is ready to be started;
obtaining an input sequence of the generative model based on the driving feature and the tagged token sequence; and
inputting the input sequence into the generative model to obtain the predicted token sequence (306, 608) and the control information (307, 609) generated by the generative model.

2. The method of claim 1, wherein the image token sequence is a discrete feature of the image data (301, 601), and the method further comprises:
extracting an image feature of the image data (301, 601) using a first convolutional network (312, 614) to obtain a first feature vector (303, 607) representing the image feature, and
wherein the generating (S240), using a generative model, a predicted token sequence (306, 608) corresponding to the image token sequence and a control information (307, 609) for the vehicle (110) based on the driving feature and the image token sequence, comprises:
generating, using the generative model, the predicted token sequence (306, 608) and the control information (307, 609) based on the driving feature, the first feature vector (303, 607) and the image token sequence.

3. The method of claim 1 or 2, wherein the driving data comprises a driving parameter (602) of the vehicle (110) and navigation data (603) of the vehicle (110); and the encoding (S230) the driving data to obtain a driving feature corresponding to the driving data comprises:
encoding the navigation data (603) using a second convolutional network (613) to obtain a second feature vector (606) representing the navigation data (603); and
encoding the driving parameter (602) using a multi-layer perceptron (612) to obtain a third feature vector (605) representing the driving parameter (602),
wherein the driving feature comprises the second feature vector (606) and the third feature vector (605); and optionally
wherein the navigation data (603) comprises positions of at least two target points on a navigation path; and the encoding the navigation data (603) using a second convolutional network (613) to obtain a second feature vector (606) representing the navigation data (603) comprises:
generating a mask image representing a path formed by the at least two target points based on the positions of the at least two target points; and
encoding the mask image using the second convolutional network (613) to obtain the second feature vector (606).

4. The method of claim 1, wherein the encoding (S220) the image data (301, 601) to obtain an image token sequence corresponding to the image data (301, 601) comprises:
encoding the image data (501) using an encoder (510) to obtain an encoded feature sequence (502); and
quantizing the encoded feature sequence (502) using a quantizer (520) to obtain the image token sequence (503).

5. A method (700) of training an autonomous driving model (130), wherein the autonomous driving model (130) comprises an encoding layer and a generative model; the encoding layer comprises a sequence encoding network and a driving data encoding network; and the method comprises:
encoding (S710), using the sequence encoding network (311, 611), image data in sample perception data to obtain an image token sequence corresponding to the image data;
encoding (S720), using the driving data encoding network (313), driving data in the sample perception data to obtain a driving feature corresponding to the driving data;
generating (S730), using the generative model, a predicted token sequence corresponding to the image token sequence and a predicted control information for a vehicle based on the driving feature and the image token sequence; and
training (S740) the autonomous driving model (130) according to the predicted token sequence and the image token sequence,
wherein the image token sequence comprises a sequence corresponding to the image data at a t^{th} moment, the predicted token sequence comprises a predicted sequence corresponding to the image data at the t^{th} moment, the predicted control information comprises control information for the vehicle at a (t+1)^{th} moment obtained by predicting using the generative model, the t^{th} moment is a current moment, and the predicted control information comprises information used to determine a driving parameter and control the vehicle driving according to the driving parameter,
wherein the generating, using the generative model, a predicted token sequence corresponding to the image token sequence and a predicted control information for a vehicle (110) based on the driving feature and the image token sequence comprises:
adding a start tag at a head position of the image token sequence and adding a query tag at a tail position of only the image token sequence, so as to obtain a tagged token sequence, wherein the start tag is used for the generative model to predict a first token in the predicted sequence representing the image data at the t^{th} moment based on the start tag, and the query tag is used to prompt the generative model that the image token sequence has been fully input and the prediction of the control information for the vehicle is ready to be started;
obtaining an input sequence of the generative model based on the driving feature and the tagged token sequence; and
inputting the input sequence into the generative model to obtain the predicted token sequence and the predicted control information generated by the generative model.

6. The method of claim 5, wherein the sample perception data further comprises a real control information; and the method further comprises:
training the autonomous driving model (130) according to a difference between the real control information and the predicted control information; and optionally
wherein the training the autonomous driving model (130) comprises:
training other model structures in the autonomous driving model (130) other than the sequence encoding network (311, 611).

7. The method of claim 5, wherein the encoding layer further comprises a first convolutional network (312, 614),
the method further comprises:
extracting an image feature of the image data using the first convolutional network (312, 614) to obtain a first feature vector representing the image feature, and
wherein the generating, using the generative model, a predicted token sequence corresponding to the image token sequence and a predicted control information for a vehicle (110) based on the driving feature and the image token sequence, comprises:
generating, using the generative model, the predicted token sequence and the predicted control information based on the driving feature, the first feature vector and the image token sequence; and optionally
wherein the driving data comprises a historical driving parameter of the vehicle (110) and historical navigation data of the vehicle (110); the driving data encoding network (313) comprises a second convolutional network (613) and a multi-layer perceptron (612); and the encoding, using the driving data encoding network (313), driving data in the sample perception data to obtain a driving feature corresponding to the driving data comprises:
encoding, using the second convolutional network (613), the historical navigation data to obtain a second feature vector representing the historical navigation data; and
encoding, using the multi-layer perceptron (612), the historical driving parameter to obtain a third feature vector representing the historical driving parameter,
wherein the driving feature comprises the second feature vector and the third feature vector.

8. The method of claim 5, wherein the sequence encoding network (311, 611) comprises an encoder (510) and a quantizer (520); and the encoding, using the sequence encoding network (311, 611), image data in sample perception data to obtain an image token sequence corresponding to the image data, comprises:
encoding, using the encoder (510), the image data to obtain an encoded feature sequence; and
quantizing, using the quantizer (520), the encoded feature sequence to obtain the image token sequence,
wherein the sequence encoding network (311, 611) is configured to process the image data based on a vector quantization compression technology.

9. The method of claim 5, wherein the generative model comprises an autoregressive model.

10. An electronic device (1000), comprising:
at least one processor; and
a memory communicatively coupled with the at least one processor,
wherein the memory stores instructions executable by the at least one processor, and the instructions, when executed by the at least one processor, are configured to cause the at least one processor to implement the method of any one of claims 1 to 4.

11. An electronic device (1000), comprising:
at least one processor; and
a memory communicatively coupled with the at least one processor,
wherein the memory stores instructions executable by the at least one processor, and the instructions, when executed by the at least one processor, are configured to cause the at least one processor to implement the method of any one of claims 5 to 9.

12. A non-transitory computer readable storage medium storing computer instructions, wherein the computer instructions are configured to cause a computer to implement the method of any one of claims 1 to 9.

13. A computer program product comprising a computer program/instruction, wherein the computer program/instruction is stored on at least one of a readable storage medium and an electronic device, and the computer program/instruction, when executed by a processor, is configured to implement steps of the method of any one of claims 1 to 9.

14. An autonomous driving vehicle comprising the electronic device of claim 10.

## Patentansprüche

1. Ein Informationsvorhersageverfahren (200), das folgende Schritte aufweist:
Erfassen (S210) von Wahrnehmungsdaten, die Bilddaten (301, 601), die von einem Sensor in einem Fahrzeug (110) erfasst werden, und Fahrdaten des Fahrzeugs (110) aufweisen;
Codieren (S220) der Bilddaten (301, 601), um eine Bild-Token-Sequenz entsprechend den Bilddaten (301, 601) zu erhalten;
Codieren (S230) der Fahrdaten, um ein Fahrmerkmal entsprechend den Fahrdaten zu erhalten; und
Erzeugen (S240), unter Verwendung eines generativen Modells, einer vorhergesagten Token-Sequenz (306, 608) entsprechend der Bild-Token-Sequenz und einer Steuerinformation (307, 609) für das Fahrzeug (110) basierend auf dem Fahrmerkmal und der Bild-Token-Sequenz,
wobei die Bild-Token-Sequenz eine Sequenz entsprechend den Bilddaten (301, 601) zu einem t-ten Zeitpunkt aufweist, die vorhergesagte Token-Sequenz (306, 608) eine vorhergesagte Sequenz entsprechend den Bilddaten (301, 601) zu dem t-ten Zeitpunkt aufweist, die Steuerinformation (307, 609) eine Steuerinformation für das Fahrzeug (110), die durch Vorhersagen unter Verwendung des generativen Modells erhalten wird, zu einem (t+1)-ten Zeitpunkt aufweist, der t-te Zeitpunkt ein aktueller Zeitpunkt ist und die Steuerinformation (307, 609) dazu verwendet wird, einen Fahrparameter zu bestimmen und ein Fahren des Fahrzeugs (110) gemäß dem Fahrparameter zu steuern,
wobei das Erzeugen (S240), unter Verwendung eines generativen Modells, einer vorhergesagten Token-Sequenz (306, 608) entsprechend der Bild-Token-Sequenz und einer Steuerinformation (307, 609) für das Fahrzeug (110) basierend auf dem Fahrmerkmal und der Bild-Token-Sequenz folgende Schritte aufweist:
Hinzufügen eines Start-Tags an einer Kopfposition der Bild-Token-Sequenz und Hinzufügen eines Abfrage-Tags an einer Endposition nur der Bild-Token-Sequenz, um eine mit Tags versehene Token-Sequenz zu erhalten, wobei das Start-Tag für das generative Modell verwendet wird, um ein erstes Token in der vorhergesagten Sequenz, welche die Bilddaten (301, 601) zu dem t-ten Zeitpunkt darstellt, basierend auf dem Start-Tag vorherzusagen, und das Abfrage-Tag verwendet wird, um dem generativen Modell mitzuteilen, dass die Bild-Token-Sequenz vollständig eingegeben wurde und die Vorhersage der Steuerinformation für das Fahrzeug bereit ist, gestartet zu werden;
Erhalten einer Eingabesequenz des generativen Modells basierend auf dem Fahrmerkmal und der mit Tags versehenen Token-Sequenz; und
Eingeben der Eingabesequenz in das generative Modell, um die vorhergesagte Token-Sequenz (306, 608) und die Steuerinformation (307, 609) zu erhalten, die durch das generative Modell erzeugt wird.

2. Das Verfahren gemäß Anspruch 1, wobei die Bild-Token-Sequenz ein diskretes Merkmal der Bilddaten (301, 601) ist und das Verfahren ferner folgenden Schritt aufweist:
Extrahieren eines Bildmerkmals der Bilddaten (301, 601) unter Verwendung eines ersten Faltungsnetzwerks (312, 614), um einen ersten Merkmalsvektor (303, 607) zu erhalten, der das Bildmerkmal darstellt, und
wobei das Erzeugen (S240), unter Verwendung eines generativen Modells, einer vorhergesagten Token-Sequenz (306, 608) entsprechend der Bild-Token-Sequenz und einer Steuerinformation (307, 609) für das Fahrzeug (110) basierend auf dem Fahrmerkmal und der Bild-Token-Sequenz folgenden Schritt aufweist:
Erzeugen, unter Verwendung des generativen Modells, der vorhergesagten Token-Sequenz (306, 608) und der Steuerinformation (307, 609) basierend auf dem Fahrmerkmal, dem ersten Merkmalsvektor (303, 607) und der Bild-Token-Sequenz.

3. Das Verfahren gemäß Anspruch 1 oder 2, wobei die Fahrdaten einen Fahrparameter (602) des Fahrzeugs (110) und Navigationsdaten (603) des Fahrzeugs (110) aufweisen und das Codieren (S230) der Fahrdaten, um ein Fahrmerkmal entsprechend den Fahrdaten zu erhalten, folgende Schritte aufweist:
Codieren der Navigationsdaten (603) unter Verwendung eines zweiten Faltungsnetzwerks (613), um einen zweiten Merkmalsvektor (606) zu erhalten, der die Navigationsdaten (603) darstellt; und
Codieren des Fahrparameters (602) unter Verwendung eines mehrschichtigen Perzeptrons (612), um einen dritten Merkmalsvektor (605) zu erhalten, der den Fahrparameter (602) darstellt,
wobei das Fahrmerkmal den zweiten Merkmalsvektor (606) und den dritten Merkmalsvektor (605) aufweist; und optional
wobei die Navigationsdaten (603) Positionen von zumindest zwei Zielpunkten auf einem Navigationspfad aufweisen und das Codieren der Navigationsdaten (603) unter Verwendung eines zweiten Faltungsnetzwerks (613), um einen zweiten Merkmalsvektor (606) zu erhalten, der die Navigationsdaten (603) darstellt, folgende Schritte aufweist:
Erzeugen eines Maskenbildes, das einen Pfad darstellt, der durch die zumindest zwei Zielpunkte basierend auf den Positionen der zumindest zwei Zielpunkte gebildet wird; und
Codieren des Maskenbildes unter Verwendung des zweiten Faltungsnetzwerks (613), um den zweiten Merkmalsvektor (606) zu erhalten.

4. Das Verfahren gemäß Anspruch 1, wobei das Codieren (S220) der Bilddaten (301, 601), um eine Bild-Token-Sequenz entsprechend den Bilddaten (301, 601) zu erhalten, folgende Schritte aufweist:
Codieren der Bilddaten (501) unter Verwendung eines Codierers (510), um eine codierte Merkmalssequenz (502) zu erhalten; und
Quantisieren der codierten Merkmalssequenz (502) unter Verwendung eines Quantisierers (520), um die Bild-Token-Sequenz (503) zu erhalten.

5. Ein Verfahren (700) zum Trainieren eines autonomen Fahrmodells (130), wobei das autonome Fahrmodell (130) eine Codierschicht und ein generatives Modell aufweist, wobei die Codierschicht ein Sequenzcodiernetzwerk und ein Fahrdatencodiernetzwerk aufweist und wobei das Verfahren folgende Schritte aufweist:
Codieren (S710), unter Verwendung des Sequenzcodiernetzwerks (311, 611), von Bilddaten in Stichprobenwahrnehmungsdaten, um eine Bild-Token-Sequenz entsprechend den Bilddaten zu erhalten;
Codieren (S720), unter Verwendung des Fahrdatencodiernetzwerks (313), von Fahrdaten in den Stichprobenwahrnehmungsdaten, um ein Fahrmerkmal entsprechend den Fahrdaten zu erhalten;
Erzeugen (S730), unter Verwendung des generativen Modells, einer vorhergesagten Token-Sequenz entsprechend der Bild-Token-Sequenz und einer vorhergesagten Steuerinformation für ein Fahrzeug basierend auf dem Fahrmerkmal und der Bild-Token-Sequenz; und
Trainieren (S740) des autonomen Fahrmodells (130) gemäß der vorhergesagten Token-Sequenz und der Bild-Token-Sequenz,
wobei die Bild-Token-Sequenz eine Sequenz entsprechend den Bilddaten zu einem t-ten Zeitpunkt aufweist, die vorhergesagte Token-Sequenz eine vorhergesagte Sequenz entsprechend den Bilddaten zu dem t-ten Zeitpunkt aufweist, die vorhergesagte Steuerinformation eine Steuerinformation für das Fahrzeug, die durch Vorhersagen unter Verwendung des generativen Modells erhalten wird, zu einem (t+1)-ten Zeitpunkt aufweist, der t-te Zeitpunkt ein aktueller Zeitpunkt ist und die vorhergesagte Steuerinformation eine Information aufweist, die dazu verwendet wird, einen Fahrparameter zu bestimmen und ein Fahren des Fahrzeugs gemäß dem Fahrparameter zu steuern,
wobei das Erzeugen, unter Verwendung des generativen Modells, einer vorhergesagten Token-Sequenz entsprechend der Bild-Token-Sequenz und einer vorhergesagten Steuerinformation für ein Fahrzeug (110) basierend auf dem Fahrmerkmal und der Bild-Token-Sequenz folgende Schritte aufweist:
Hinzufügen eines Start-Tags an einer Kopfposition der Bild-Token-Sequenz und Hinzufügen eines Abfrage-Tags an einer Endposition nur der Bild-Token-Sequenz, um eine mit Tags versehene Token-Sequenz zu erhalten, wobei das Start-Tag für das generative Modell verwendet wird, um ein erstes Token in der vorhergesagten Sequenz, welche die Bilddaten zu dem t-ten Zeitpunkt darstellt, basierend auf dem Start-Tag vorherzusagen, und das Abfrage-Tag verwendet wird, um dem generativen Modell mitzuteilen, dass die Bild-Token-Sequenz vollständig eingegeben wurde und die Vorhersage der Steuerinformation für das Fahrzeug bereit ist, gestartet zu werden;
Erhalten einer Eingabesequenz des generativen Modells basierend auf dem Fahrmerkmal und der mit Tags versehenen Token-Sequenz; und
Eingeben der Eingabesequenz in das generative Modell, um die vorhergesagte Token-Sequenz und die vorhergesagte Steuerinformation zu erhalten, die durch das generative Modell erzeugt wird.

6. Das Verfahren gemäß Anspruch 5, wobei die Stichprobenwahrnehmungsdaten ferner eine reale Steuerinformation aufweisen und das Verfahren ferner folgenden Schritt aufweist:
Trainieren des autonomen Fahrmodells (130) gemäß einer Differenz zwischen der realen Steuerinformation und der vorhergesagten Steuerinformation; und optional
wobei das Trainieren des autonomen Fahrmodells (130) folgenden Schritt aufweist:
Trainieren anderer Modellstrukturen in dem autonomen Fahrmodell (130) außer dem Sequenzcodiernetzwerk (311, 611).

7. Das Verfahren gemäß Anspruch 5, wobei die Codierschicht ferner ein erstes Faltungsnetzwerk (312, 614) aufweist,
wobei das Verfahren ferner folgenden Schritt aufweist:
Extrahieren eines Bildmerkmals der Bilddaten unter Verwendung des ersten Faltungsnetzwerks (312, 614), um einen ersten Merkmalsvektor zu erhalten, der das Bildmerkmal darstellt, und
wobei das Erzeugen, unter Verwendung des generativen Modells, einer vorhergesagten Token-Sequenz entsprechend der Bild-Token-Sequenz und einer vorhergesagten Steuerinformation für ein Fahrzeug (110) basierend auf dem Fahrmerkmal und der Bild-Token-Sequenz folgenden Schritt aufweist:
Erzeugen, unter Verwendung des generativen Modells, der vorhergesagten Token-Sequenz und der vorhergesagten Steuerinformation basierend auf dem Fahrmerkmal, dem ersten Merkmalsvektor und der Bild-Token-Sequenz; und optional
wobei die Fahrdaten einen historischen Fahrparameter des Fahrzeugs (110) und historische Navigationsdaten des Fahrzeugs (110) aufweisen, das Fahrdatencodiernetzwerk (313) ein zweites Faltungsnetzwerk (613) und ein mehrschichtiges Perzeptron (612) aufweist und das Codieren, unter Verwendung des Fahrdatencodiernetzwerks (313), von Fahrdaten in den Stichprobenwahrnehmungsdaten, um ein Fahrmerkmal entsprechend den Fahrdaten zu erhalten, folgende Schritte aufweist:
Codieren, unter Verwendung des zweiten Faltungsnetzwerks (613), der historischen Navigationsdaten, um einen zweiten Merkmalsvektor zu erhalten, der die historischen Navigationsdaten darstellt; und
Codieren, unter Verwendung des mehrschichtigen Perzeptrons (612), des historischen Fahrparameters, um einen dritten Merkmalsvektor zu erhalten, der den historischen Fahrparameter darstellt,
wobei das Fahrmerkmal den zweiten Merkmalsvektor und den dritten Merkmalsvektor aufweist.

8. Das Verfahren gemäß Anspruch 5, wobei das Sequenzcodiernetzwerk (311, 611) einen Codierer (510) und einen Quantisierer (520) aufweist und das Codieren, unter Verwendung des Sequenzcodiernetzwerks (311, 611), von Bilddaten in Stichprobenwahrnehmungsdaten, um eine Bild-Token-Sequenz entsprechend den Bilddaten zu erhalten, folgende Schritte aufweist:
Codieren, unter Verwendung des Codierers (510), der Bilddaten, um eine codierte Merkmalssequenz zu erhalten; und
Quantisieren, unter Verwendung des Quantisierers (520), der codierten Merkmalssequenz, um die Bild-Token-Sequenz zu erhalten,
wobei das Sequenzcodiernetzwerk (311, 611) dazu konfiguriert ist, die Bilddaten basierend auf einer Vektorquantisierungskompressionstechnologie zu verarbeiten.

9. Das Verfahren gemäß Anspruch 5, wobei das generative Modell ein autoregressives Modell aufweist.

10. Eine elektronische Vorrichtung (1000), die folgende Merkmale aufweist:
zumindest einen Prozessor; und
einen Speicher, der kommunikativ mit dem zumindest einen Prozessor gekoppelt ist,
wobei der Speicher Anweisungen speichert, die durch den zumindest einen Prozessor ausführbar sind, und die Anweisungen bei Ausführung durch den zumindest einen Prozessor dazu konfiguriert sind, zu bewirken, dass der zumindest eine Prozessor das Verfahren gemäß einem der Ansprüche 1 bis 4 implementiert.

11. Eine elektronische Vorrichtung (1000), die folgende Merkmale aufweist:
zumindest einen Prozessor; und
einen Speicher, der kommunikativ mit dem zumindest einen Prozessor gekoppelt ist,
wobei der Speicher Anweisungen speichert, die durch den zumindest einen Prozessor ausführbar sind, und die Anweisungen bei Ausführung durch den zumindest einen Prozessor dazu konfiguriert sind, zu bewirken, dass der zumindest eine Prozessor das Verfahren gemäß einem der Ansprüche 5 bis 9 implementiert.

12. Ein nicht flüchtiges computerlesbares Speichermedium, das Computeranweisungen speichert, wobei die Computeranweisungen dazu konfiguriert sind, zu bewirken, dass ein Computer das Verfahren gemäß einem der Ansprüche 1 bis 9 implementiert.

13. Ein Computerprogrammprodukt, das ein Computerprogramm/eine Anweisung aufweist, wobei das Computerprogramm/die Anweisung auf zumindest einem von einem lesbaren Speichermedium und einer elektronischen Vorrichtung gespeichert ist, und das Computerprogramm/die Anweisung bei Ausführung durch einen Prozessor dazu konfiguriert ist, Schritte des Verfahrens gemäß einem der Ansprüche 1 bis 9 zu implementieren.

14. Ein autonom fahrendes Fahrzeug, das die elektronische Vorrichtung gemäß Anspruch 10 aufweist.

## Revendications

1. Procédé de prédiction d'informations (200), comprenant :
l'acquisition (S210) de données de perception comprenant des données d'image (301, 601) acquises par un capteur dans un véhicule (110) et des données de conduite du véhicule (110) ;
le codage (S220) des données d'image (301, 601) afin d'obtenir une séquence de jetons d'image correspondant aux données d'image (301, 601) ;
le codage (S230) des données de conduite afin d'obtenir une caractéristique de conduite correspondant à ces données ; et
la génération (S240), à l'aide d'un modèle génératif, d'une séquence de jetons prédite (306, 608) correspondant à la séquence de jetons d'image, ainsi qu'une information de commande (307, 609) pour le véhicule (110) sur la base de la caractéristique de conduite et de la séquence de jetons d'image,
dans lequel la séquence de jetons d'image comprend une séquence correspondant aux données d'image (301, 601) à un t^{ème} instant, la séquence de jetons prédite (306, 608) comprend une séquence prédite correspondant aux données d'image (301, 601) au t^{ème} instant, l'information de commande (307, 609) comprend une information de commande pour le véhicule (110) à un (t+1)^{ème} instant, obtenue par prédiction à l'aide du modèle génératif, le t^{ème} instant est un instant actuel, et l'information de commande (307, 609) est utilisée pour déterminer un paramètre de conduite et commander la conduite du véhicule (110) selon le paramètre de conduite,
dans lequel la génération (S240), à l'aide d'un modèle génératif, d'une séquence de jetons prédite (306, 608) correspondant à la séquence de jetons d'image, ainsi qu'une information de commande (307, 609) pour le véhicule (110) sur la base de la caractéristique de conduite et de la séquence de jetons d'image, comprend :
l'ajout d'une balise de début à une position de tête de la séquence de jetons d'image et l'ajout d'une balise de requête à une position de queue de la séquence de jetons d'image uniquement, de manière à obtenir une séquence de jetons balisée, dans lequel la balise de début est utilisée par le modèle génératif pour prédire un premier jeton dans la séquence prédite représentant les données d'image (301, 601) au t^{ème} instant, sur la base de la balise de début, et la balise de requête est utilisée pour signaler au modèle génératif que la séquence de jetons d'image a été entièrement saisie et que la prédiction de l'information de commande pour le véhicule est prête à être lancée ;
l'obtention d'une séquence d'entrée du modèle génératif sur la base de la caractéristique de pilotage et de la séquence de jetons balisée ; et
l'introduction de la séquence d'entrée dans le modèle génératif afin d'obtenir la séquence de jetons prédite (306, 608) et l'information de commande (307, 609) générée par le modèle génératif.

2. Procédé selon la revendication 1, dans lequel la séquence de jetons d'image est une caractéristique discrète des données d'image (301, 601), et le procédé comprend en outre :
l'extraction d'une caractéristique d'image des données d'image (301, 601) à l'aide d'un premier réseau convolutif (312, 614) afin d'obtenir un premier vecteur de caractéristiques (303, 607) représentant la caractéristique d'image, et
dans lequel la génération (S240), à l'aide d'un modèle génératif, d'une séquence de jetons prédite (306, 608) correspondant à la séquence de jetons d'image, ainsi qu'une information de commande (307, 609) pour le véhicule (110) sur la base de la caractéristique de conduite et de la séquence de jetons d'image, comprend :
la génération, à l'aide du modèle génératif, de la séquence de jetons prédite (306, 608) et de l'information de commande (307, 609) sur la base de la caractéristique de conduite, du premier vecteur de caractéristiques (303, 607) et de la séquence de jetons d'image.

3. Procédé selon la revendication 1 ou 2, dans lequel les données de conduite comprennent un paramètre de conduite (602) du véhicule (110) et des données de navigation (603) du véhicule (110) ; et le codage (S230) des données de conduite pour obtenir une caractéristique de conduite correspondant aux données de conduite comprend :
le codage des données de navigation (603) à l'aide d'un deuxième réseau convolutif (613) afin d'obtenir un deuxième vecteur de caractéristiques (606) représentant les données de navigation (603) ; et
le codage du paramètre de conduite (602) à l'aide d'un perceptron multicouche (612) afin d'obtenir un troisième vecteur de caractéristiques (605) représentant le paramètre de conduite (602),
dans lequel la caractéristique de conduite comprend le deuxième vecteur de caractéristiques (606) et le troisième vecteur de caractéristiques (605) ; et, éventuellement,
dans lequel les données de navigation (603) comprennent les positions d'au moins deux points cibles sur un itinéraire de navigation ; et le codage des données de navigation (603) à l'aide d'un deuxième réseau convolutif (613) afin d'obtenir un deuxième vecteur de caractéristiques (606) représentant les données de navigation (603) comprend :
la génération d'une image de masque représentant un itinéraire formé par les au moins deux points cibles, sur la base des positions des au moins deux points cibles ; et
le codage de l'image de masque à l'aide du deuxième réseau convolutif (613) afin d'obtenir le deuxième vecteur de caractéristiques (606).

4. Procédé selon la revendication 1, dans lequel le codage (S220) des données d'image (301, 601) afin d'obtenir une séquence de jetons d'image correspondant aux données d'image (301, 601) comprend :
le codage des données d'image (501) à l'aide d'un codeur (510) afin d'obtenir une séquence de caractéristiques codées (502) ; et
la quantification de la séquence de caractéristiques codées (502) à l'aide d'un quantificateur (520) afin d'obtenir la séquence de jetons d'image (503).

5. Procédé (700) d'entraînement d'un modèle de conduite autonome (130), dans lequel le modèle de conduite autonome (130) comprend une couche de codage et un modèle génératif ; la couche de codage comprend un réseau de codage de séquences et un réseau de codage de données de conduite ; et le procédé comprend :
le codage (S710), à l'aide du réseau de codage de séquences (311, 611), des données d'image contenues dans les données de perception d'échantillons afin d'obtenir une séquence de jetons d'image correspondant à ces données d'image ;
le codage (S720), à l'aide du réseau de codage des données de conduite (313), des données de conduite contenues dans les données de perception d'échantillons afin d'obtenir une caractéristique de conduite correspondant aux données de conduite ;
la génération (S730), à l'aide du modèle génératif, d'une séquence de jetons prédite correspondant à la séquence de jetons d'image, ainsi que d'une information de commande prédite pour un véhicule, sur la base de la caractéristique de conduite et de la séquence de jetons d'image ; et
l'entraînement (S740) du modèle de conduite autonome (130) selon la séquence de jetons prédite et de la séquence de jetons d'image,
dans lequel la séquence de jetons d'image comprend une séquence correspondant aux données d'image à un t^{ème} instant, la séquence de jetons prédite comprend une séquence prédite correspondant aux données d'image au t^{ème} instant, l'information de commande prédite comprend une information de commande pour le véhicule à un (t+1)^{ème} instant, obtenue par prédiction à l'aide du modèle génératif, le t^{ème} instant est un instant actuel, et l'information de commande prédite comprend une information utilisée pour déterminer un paramètre de conduite et commander la conduite du véhicule selon le paramètre de conduite,
dans lequel la génération, à l'aide du modèle génératif, d'une séquence de jetons prédite correspondant à la séquence de jetons d'image, ainsi que d'une information de commande prédite pour un véhicule (110), sur la base de la caractéristique de conduite et de la séquence de jetons d'image comprend :
l'ajout d'une balise de début à une position de tête de la séquence de jetons d'image et l'ajout d'une balise de requête à une position de queue de la séquence de jetons d'image uniquement, de manière à obtenir une séquence de jetons balisée, dans lequel la balise de début est utilisée par le modèle génératif pour prédire un premier jeton dans la séquence prédite représentant les données d'image au t^{ème} instant, sur la base de la balise de début, et la balise de requête est utilisée pour signaler au modèle génératif que la séquence de jetons d'image a été entièrement saisie et que la prédiction d'une information de commande pour le véhicule est prête à être lancée ;
l'obtention d'une séquence d'entrée du modèle génératif sur la base de la caractéristique de pilotage et de la séquence de jetons balisée ; et
l'introduction de la séquence d'entrée dans le modèle génératif afin d'obtenir la séquence de jetons prédite et l'information de commande prédite générée par le modèle génératif.

6. Procédé selon la revendication 5, dans lequel les données de perception d'échantillons comprennent en outre une information de commande réelle ; et le procédé comprend en outre :
l'entraînement du modèle de conduite autonome (130) selon la différence entre l'information de commande réelle et l'information de commande prédite ; et, éventuellement,
dans lequel l'entraînement du modèle de conduite autonome (130) comprend :
l'entraînement d'autres structures du modèle de conduite autonome (130) autres que le réseau de codage de séquences (311, 611).

7. Procédé selon la revendication 5, dans lequel la couche de codage comprend en outre un premier réseau convolutif (312, 614),
le procédé comprend en outre :
l'extraction d'une caractéristique d'image des données d'image à l'aide du premier réseau convolutif (312, 614) afin d'obtenir un premier vecteur de caractéristiques représentant la caractéristique d'image, et
dans lequel la génération, à l'aide du modèle génératif, d'une séquence de jetons prédite correspondant à la séquence de jetons d'image, ainsi que d'une information de commande prédite pour un véhicule (110), sur la base de la caractéristique de conduite et de la séquence de jetons d'image comprend :
la génération, à l'aide du modèle génératif, de la séquence de jetons prédite et d'une information de commande prédite sur la base de la caractéristique de conduite, du premier vecteur de caractéristiques et de la séquence de jetons d'image ; et, éventuellement,
dans lequel les données de conduite comprennent un paramètre de conduite historique du véhicule (110) et des données de navigation historiques du véhicule (110) ; le réseau de codage des données de conduite (313) comprend un deuxième réseau convolutif (613) et un perceptron multicouche (612) ; et le codage, à l'aide du réseau de codage des données de conduite (313), des données de conduite contenues dans les données de perception d'échantillons afin d'obtenir une caractéristique de conduite correspondant aux données de conduite comprend :
le codage, à l'aide du deuxième réseau convolutif (613), des données de navigation historiques afin d'obtenir un deuxième vecteur de caractéristiques représentant les données de navigation historiques ; et
le codage, à l'aide du perceptron multicouche (612), du paramètre de conduite historique afin d'obtenir un troisième vecteur de caractéristiques représentant le paramètre de conduite historique,
dans lequel la caractéristique de conduite comprend le deuxième vecteur de caractéristiques et le troisième vecteur de caractéristiques.

8. Procédé selon la revendication 5, dans lequel le réseau de codage de séquences (311, 611) comprend un codeur (510) et un quantificateur (520) ; et le codage, à l'aide du réseau de codage de séquences (311, 611), de données d'image contenues dans des données de perception d'échantillons afin d'obtenir une séquence de jetons d'image correspondant aux données d'image, comprend :
le codage, à l'aide du codeur (510), des données d'image afin d'obtenir une séquence de caractéristiques codées ; et
la quantification, à l'aide du quantificateur (520), de la séquence de caractéristiques codées afin d'obtenir la séquence de jetons d'image,
dans lequel le réseau de codage de séquences (311, 611) est configuré pour traiter les données d'image sur la base d'une technologie de compression par quantification vectorielle.

9. Procédé selon la revendication 5, dans lequel le modèle génératif comprend un modèle autorégressif.

10. Dispositif électronique (1000), comprenant :
au moins un processeur ; et
une mémoire couplée de manière communicative à au moins un processeur,
dans lequel la mémoire stocke des instructions exécutables par l'au moins un processeur, et les instructions, lorsqu'elles sont exécutées par l'au moins un processeur, sont configurées pour amener l'au moins un processeur à mettre en œuvre le procédé selon l'une quelconque des revendications 1 à 4.

11. Dispositif électronique (1000), comprenant :
au moins un processeur ; et
une mémoire couplée de manière communicative à au moins un processeur,
dans lequel la mémoire stocke des instructions exécutables par l'au moins un processeur, et les instructions, lorsqu'elles sont exécutées par l'au moins un processeur, sont configurées pour amener l'au moins un processeur à mettre en œuvre le procédé selon l'une quelconque des revendications 5 à 9.

12. Support de stockage non transitoire lisible par ordinateur stockant des instructions informatiques, dans lequel les instructions informatiques sont configurées pour amener un ordinateur à mettre en œuvre le procédé selon l'une des revendications 1 à 9.

13. Produit de programme informatique comprenant un programme/une instruction informatique, dans lequel ledit programme/ladite instruction informatique est stocké(e) sur au moins un support de stockage lisible ou un dispositif électronique, et le programme/l'instruction informatique, lorsqu'il/elle est exécuté(e) par un processeur, est configuré(e) pour mettre en œuvre les étapes du procédé selon l'une quelconque des revendications 1 à 9.

14. Véhicule à conduite autonome, comprenant le dispositif électronique selon la revendication 10.
